# EUROPÄISCHE PATENTSCHRIFT

(11) **EP 3 697 579 B1**
(45) Veröffentlichungstag und Bekanntmachung des Hinweises auf die Patenterteilung: **16.08.2023**
(21) Anmeldenummer: 18786308.9
(22) Anmeldetag: 12.10.2018
(51) Int. Cl.: B25J 9/16

(54) **VERFAHREN UND SYSTEM ZUM BETREIBEN EINES ROBOTERARMS**
METHOD AND SYSTEM FOR OPERATING A ROBOTIC ARM
PROCÉDÉ ET SYSTÈME POUR FAIRE FONCTIONNER UN BRAS DE ROBOT

(30) Priorität: 17.10.2017 DE 102017009641
(43) Veröffentlichungstag der Anmeldung: 26.08.2020
(73) Patentinhaber: KUKA Deutschland GmbH, 86165 Augsburg (DE)
(72) Erfinder: RIEDEL, Martin, 86165 Augsburg (DE)
(74) Vertreter: Oelke, Jochen
(86) Internationale Anmeldenummer: PCT/EP2018/077832
(87) Internationale Veröffentlichungsnummer: WO 2019/076738

(56) Entgegenhaltungen:
- WO-A1-2016/000770
- WO-A1-2017/044630
- CH-A2- 701 886
- US-A1- 2017 248 936

## Beschreibung

Die vorliegende Erfindung betrifft ein Verfahren und ein System zum Betreiben eines Roboterarms sowie einen Roboter mit dem System und ein Computerprogrammprodukt zur Durchführung des Verfahrens.

Kollaborieren Menschen mit Robotern, die Roboterarme aufweisen, so behalten die Menschen die Roboterarme in der Regel unwillkürlich im Auge, um bei unvorhergesehenen Bewegungen rasch ausweichen zu können, was den kollaborierenden Betrieb beeinträchtigt. Zudem beeinträchtigen Kollisionen der Roboterarme mit Menschen aufgrund von vom Menschen nicht vorhergesehenen Bewegungen der Roboterarme deren Taktzeiten.

Aus der WO 2017/044630 A1 ist ein LED-Ring am Endeffektor eines Roboters sowie umgebungsseitige bzw. roboterfremde Lichtstreifen an Regalbehältern und Lichtständer bekannt. Dabei werden bevorstehende Verstellungen des Roboterarms visualisiert. Dies derart, dass bei einem bestimmten Vorgehen, wie dem Zurücklegen eines Gegenstandes auf ein Transportmittel, eine bestimmte Farbe leuchtet und wenn der Roboter sich in einem anderen Modus befindet, wie der Bewegung zu einem Sortierbehälter eine bestimmte andere Farbe leuchtet. Es kann dabei eine antizipierte Bewegung des Roboters in den verschiedenen Farben illuminiert werden.

Die US 2017/248936 A1 beschreibt ein Robotersystem mit einer Beleuchtungsvorrichtung im oder um einen Roboter, mit einer Steuervorrichtung, die das System steuert, in der Art, dass eine Beleuchtungssteuerungseinheit die Beleuchtungsvorrichtung an oder ausschaltet, auf der Basis des bevorstehenden Arbeitsbereichs.

Die WO 2016/000770 A1 zeigt bodenseitige Leuchtelemente sowie einen Bildprojektor.

Aus der CH 701 886 A2 ist ein Roboterarm bekannt, der ein Set aus sichtbaren Illuminierungselementen in der Anordnung einer Matrix beschreibt.

Aufgabe der vorliegenden Erfindung ist es, den Betrieb von Robotern mit Roboterarmen zu verbessern, in der Art, dass Kollisionsgefahren reduziert werden.

Diese Aufgabe wird durch ein Verfahren mit den Merkmalen des Anspruchs 1 gelöst. Ansprüche 8 - 10 stellen ein System bzw. Computerprogrammprodukt zur Durchführung eines hier beschriebenen Verfahrens bzw. einen Roboter mit einem hier beschriebenen System unter Schutz. Die Unteransprüche betreffen vorteilhafte Weiterbildungen.

Nach einer Ausführung der vorliegenden Erfindung wird bei einem Verfahren zum Betreiben eines Roboterarms durch ein Visualisierungsmittel, welches vorliegend ohne Beschränkung der Allgemeinheit auch als erstes Visualisierungsmittel bezeichnet wird, vor und/oder während eines Betriebs des Roboters temporär oder dauernd eine bevorstehende Verstellung wenigstens einer Achse des Roboterarms, in einer Ausführung nicht aller, sondern nur einer (echten) Teilmenge der Achsen des Roboterarms, insbesondere (auch) der roboterarmbasisnächsten Achse des Roboterarms, in einer Weiterbildung genau bzw. nur einer, insbesondere (der) roboterarmbasisnächsten, Achse des Roboterarms, am Roboterarm und/oder in dessen Arbeitsraum und/oder auf einer Arbeitsfläche unter dem Roboterarm visualisiert bzw. (für Menschen) im Arbeitsraum des Roboterarms (optisch) angezeigt.

Hierdurch kann sich ein bzw. der Mensch im Arbeitsraum des Roboterarms besser auf seine Tätigkeit konzentrieren, ohne wenigstens aus dem Augenwinkel heraus den kompletten Roboterarm beobachten zu müssen. Zusätzlich oder alternativ kann hierdurch die Gefahr einer Kollision des Roboterarms mit einem bzw. dem Menschen im Arbeitsraum des Roboterarms aufgrund von Bewegungen der Roboterarme, die der Mensch nicht vorhergesehen hat, und damit eine Beeinträchtigung von Taktzeiten des Roboterarms aufgrund kollisionsbedingter Stillstände und/oder Geschwindigkeitsreduktionen reduziert werden.

Der Roboterarm weist in einer Ausführung wenigstens drei, insbesondere wenigstens sechs, in einer Ausführung wenigstens sieben, Gelenke bzw. Achsen, insbesondere Drehgelenke bzw. -achsen, auf, die durch Antriebe, insbesondere Elektromotoren oder dergleichen, verstellt werden.

Die vorliegende Erfindung kann bei solchen komplexe(re)n, insbesondere redundanten, aktuierten Roboterarmen mit besonderem Vorteil eingesetzt werden.

Eine bevorstehende Verstellung kann in einer Ausführung eine zeitlich, insbesondere unmittelbar, auf den aktuellen Zeitpunkt folgende Verstellung, insbesondere eine Verstellung infolge eines nächsten (abzuarbeitenden) Programmbefehls oder mehrerer nächster (abzuarbeitender) Programmbefehle eines Arbeitsprogramms für den Roboterarm umfassen, insbesondere sein. In einer Ausführung kann eine bevorstehende bzw. visualisierte Verstellung eine Richtung, ein(en) Stellweg und/oder eine Verstellgeschwindigkeit der entsprechenden Achse umfassen, insbesondere sein. In einer Ausführung wird die bevorstehende Verstellung, in einer Weiterbildung auf Basis eines Arbeitsprogramms, insbesondere eines nächsten (abzuarbeitenden) Programmbefehls oder mehrerer nächster (abzuarbeitender) Programmbefehle des Arbeitsprogramms, für den Roboterarm und/oder von einer Steuerung des Roboterarms prognostiziert, insbesondere abgeschätzt, in einer Ausführung online bzw. während eines Betriebs des Roboterarms.

Eine Roboterarmbasis ist in einer Ausführung in fachüblicher Weise das umgebungsseitige bzw. -nächste bzw. bezüglich einem Roboterarmflansch bzw. roboterarmgeführten Werkzeug (kinematisch bzw. strukturell) entfernteste Roboterarmglied. Sie kann in einer Ausführung stationär sein, was eine besonders vorteilhafte Verwendung der vorliegenden Erfindung darstellt, da solche stationären Roboterarme regelmäßig auf kleinerem Raum, länger und/oder häufiger mit Menschen kollaborieren. In einer anderen Ausführung ist die Roboterarmbasis mobil, insbesondere auf einer mobilen Plattform angeordnet, was ebenfalls eine vorteilhafte Verwendung der vorliegenden Erfindung darstellt, da solche mobilen Roboterarme regelmäßig mit mehreren verschiedenen Menschen kollaborieren.

Als roboterarmbasisnächste Achse wird entsprechend diejenige (Gelenk- bzw. Bewegungs)Achse bezeichnet, in der die Roboterarmbasis mit einem weiteren Glied des Roboterarms (gelenkig) verbunden ist. In einer Ausführung ist die roboterarmbasisnächste Achse eine, insbesondere vertikale oder horizontale, Drehachse.

Die Visualisierung der bevorstehenden Verstellung (wenigstens) einer solchen, insbesondere roboterarmbasisnächsten, Achse stellt eine besonders vorteilhafte Verwendung der vorliegenden Erfindung dar, da Schwenkbewegungen (um) eine(r) solche(r) Achse häufig sehr raumeinnehmend sind und/oder als besonders überraschend und/oder schnell empfunden werden. So kann ein Mensch sich regelmäßig gefahrlos bzw. unbeeinträchtigt neben einem üblichen Knickarmroboter aufhalten, solange dieser nicht um seine roboterarmbasisnächste Achse schwenkt bzw. der Mensch eine entsprechende bevorstehende Schwenkbewegungen rechtzeitig erfasst.

Unter einem Arbeitsraum wird vorliegend insbesondere der kartesische Raum verstanden, den der Roboterarm konstruktiv bzw. kinematisch einnehmen kann oder regelungstechnisch einnehmen darf.

Eine Arbeitsfläche im Sinne der vorliegenden Erfindung kann insbesondere eine Bodenfläche eines solchen Arbeitsraums und/oder eine Arbeitsfläche für den Roboterarm und/oder einen bzw. eines mit dem Roboterarm kollaborierenden Menschen aufweisen, insbesondere sein. In einer Ausführung kann die Arbeitsfläche eine, in einer Ausführung die jeweils dem Roboterarm nächste(n), Fläche(n) unter dem Roboterarm aufweisen, die der Roboterarm von oben überstreichen, insbesondere erreichen, kann, insbesondere hieraus bestehen, beispielsweise also eine Oberfläche eines Roboterzellenbodens, Arbeitstisches, Regals, Förderbandes oder dergleichen und/oder eines oder mehrerer hierauf oder -unter angeordneter Objekte, insbesondere Werkstücke, Werkzeuge oder dergleichen.

Erfindungsgemäß ist das erste Visualisierungsmittel, insbesondere dauerhaft bzw. nicht zerstörungsfrei lösbar oder (zerstörungsfrei) lösbar und/oder in einer formschlüssig vorgegebenen Pose, an einer bzw. der Roboterarmbasis oder einem Roboterarmglied, insbesondere einem mit der Roboterarmbasis in einem Gelenk verbundenen roboterarmbasisnächsten Roboterarmglied, angeordnet.

Durch eine Anordnung an der Roboterarmbasis kann das Visualisierungsmittel in einer Ausführung vorteilhaft angeordnet, insbesondere mit Energie versorgt und/oder angesteuert, werden. Zusätzlich muss es bei einer Verstellung des Roboterarms nicht mitbewegt werden. Auf diese Weise kann das Visualisierungsmittel in einer Ausführung geschützt werden. Zusätzlich oder alternativ ist keine Energie zum Bewegen des Visualisierungsmittels erforderlich.

Durch eine Anordnung an dem, insbesondere basisnächsten, Roboterarmglied kann das Visualisierungsmittel in einer Ausführung mitbewegt und so kompakter ausgebildet werden. In einer Ausführung ist es symmetrisch zu( eine)r Bewegungsachse des Roboterarmglieds, in einer Ausführung also symmetrisch zur ersten bzw. roboterarmbasisnächsten Achse ausgebildet, um gegensinnige Bewegungen um bzw. in diese(r) Achse vorteilhaft visualisieren zu können.

Durch eine (zerstörungsfrei) lösbare Anordnung kann das Visualisierungsmittel in einer Ausführung vorteilhaft wechsel- bzw. wahlweise an verschiedenen Roboterarmen verwendet und/oder nachgerüstet werden. Durch eine formschlüssig vorgegebene Pose kann in einer Ausführung eine korrekte Visualisierung sichergestellt bzw. deren Präzision verbessert werden. In einer Ausführung weisen das erste Visualisierungsmittel und die Roboterarmbasis bzw. das Roboterarmglied hierzu zueinander komplementäre Anschlussgeometrien auf. Durch eine dauerhafte Anordnung kann in einer Ausführung die Präzision der Visualisierung verbessert werden.

Erfindungsgemäß visualisiert das erste Visualisierungsmittel wenigstens eine in einer vorgegebenen Zeit bevorstehende Stellung der wenigstens einen Achse bzw. eine Stellung der wenigstens einen Achse, die diese in einer bzw. der vorgegebenen Zeit voraussichtlich erreichen bzw. einnehmen wird, in einer Ausführung mehrere in vorgegebenen Zeiten bevorstehende Stellungen der wenigstens einen Achse bzw. Stellungen der wenigstens einen Achse, die diese in den vorgegebenen Zeiten voraussichtlich erreichen bzw. einnehmen wird.

Hierdurch kann die bevorstehende Verstellung vorteilhaft visualisiert werden, da sich der Anwender auf die vorgegebene(n) Zeit(en) einstellen kann. In einer Ausführung ist die vorgegebene Zeit (jeweils) einstellbar und/oder beträgt wenigstens 0,1 Sekunden [s], insbesondere wenigstens 0,5 s, in einer Ausführung wenigstens 1 s, und/oder höchstens 10 s, insbesondere höchstens 5 s, in einer Ausführung höchstens 3 s. Solche Zeiträume stellen einen besonders vorteilhaften Kompromiss aus (noch) rechtzeitigem und (bereits) relevantem Hinweis dar.

In einer Ausführung wird bzw. werden die vorgegebene(n) Zeit(en), insbesondere im Betrieb bzw. online, variabel, insbesondere in Abhängigkeit von einer bevorstehenden, insbesondere nächsten, Stoppstellung und/oder Geschwindigkeit der wenigstens einen Achse ermittelt, in einer Ausführung derart, dass die Achse in der bzw. den bevorstehenden Stellung(en) bzw. zu der bzw. den vorgegebene(n) Zeit(en) voraussichtlich (jeweils) einen vorgegebenen Abstand von der aktuellen und/oder bevorstehenden, insbesondere nächsten, Stoppstellung aufweist/aufweisen. Insbesondere können mehrere der vorgegebenen Zeiten derart ermittelt werden, dass sie den Stellweg der Achse bis zur bevorstehenden, insbesondere nächsten, Stoppstellung auf vorgegebene Weise, insbesondere äquidistant, aufteilen.

In einer Ausführung visualisiert das erste Visualisierungsmittel zusätzlich die (jeweils) aktuelle Stellung der wenigstens einen Achse und in einer Weiterbildung auch ein oder mehrere, in einer Ausführung alle, (Zwischen)Stellungen zwischen der aktuellen und der in einer vorgegebenen Zeit bevorstehenden Stellung. Ändert sich die aktuelle Stellung, ändert sich in einer Ausführung auch die Visualisierung entsprechend, so dass das Visualisierungsmittel in einer Ausführung einen dynamisch mit der jeweiligen Achse (mit)wandernden Bereich visualisiert.

Hierdurch kann die bevorstehende Verstellung vorteilhaft visualisiert, insbesondere animiert werden.

Erfindungsgemäß visualisiert das erste Visualisierungsmittel die bevorstehende nächste Stoppstellung der wenigstens einen Achse bzw. eine Stoppstellung der wenigstens einen Achse, in der diese voraussichtlich als nächstes zum Stillstand kommen wird.

Hierdurch kann die bevorstehende Verstellung ebenfalls vorteilhaft visualisiert werden, da sich der Anwender auf das Ende der bevorstehenden Verstellung bzw. die voraussichtliche (nächste) Stoppstellung einstellen kann.

In einer Ausführung illuminiert das erste Visualisierungsmittel zum Visualisieren der in einer vorgegebenen Zeit bevorstehenden Stellung bzw. der bevorstehenden Stoppstellung der wenigstens einen Achse (jeweils) einen dieser bevorstehenden Stellung bzw. Stoppstellung zugeordneten, insbesondere entsprechenden, Bereich am Roboterarm, insbesondere der Roboterarmbasis, in einer Ausführung eine oder mehrere dieser S(topps)tellung zugeordnete bzw. diese S(topps)tellung anzeigende Leuchtmittel des Visualisierungsmittels, die an dem Roboterarm bzw. der Roboterarmbasis angeordnet sind.

Erfindungsgemäß illuminiert das erste Visualisierungsmittel zum Visualisieren der in einer vorgegebenen Zeit bevorstehenden Stellung bzw. der bevorstehenden Stoppstellung der wenigstens einen Achse in einer Ausführung (jeweils) eine (entsprechende), insbesondere kreis-, kreissegment- oder ellipsenartige, Fläche unter einem Aufenthaltsraums des Roboterarms(, den dieser) in der bevorstehende Stellung bzw. Stoppstellung der wenigstens einen Achse (einnimmt bzw. einnehmen wird), in einer Ausführung durch wenigstens teilweises Anleuchten dieser Fläche, insbesondere durch Projizieren eines Bildes auf diese Fläche.

Hierdurch kann die bevorstehende Verstellung besonders vorteilhaft visualisiert werden, da der Anwender nur den entsprechenden Bereich am bzw. unter dem Roboterarm im Auge behalten muss.

In einer Ausführung illuminiert das erste Visualisierungsmittel den Bereich bzw. die Fläche, falls ein Erreichen der Stoppstellung in einem ersten Zeitraum prognostiziert wird, und illuminiert den Bereich bzw. die Fläche hiervon unterschiedlich, falls ein Erreichen der Stoppstellung in einem zweiten Zeitraum prognostiziert wird. In einer Ausführung kann das Visualisierungsmittel den Bereich bzw. die Fläche in einer ersten Farbe, Helligkeit und/oder Größe, insbesondere Anzahl von Elementen, illuminieren, falls ein Erreichen der Stoppstellung in dem ersten Zeitraum prognostiziert wird, und in einer hiervon verschiedenen Farbe, Helligkeit und/oder Größe, insbesondere Anzahl von Elementen, illuminieren, falls ein Erreichen der Stoppstellung in dem zweiten Zeitraum prognostiziert wird.

Hierdurch kann die bevorstehende Verstellung besonders vorteilhaft visualisiert werden, da dem Anwender zusätzlich zum Stellweg auch eine Stellzeit bzw. das zeitliche Erreichen der Stoppstellung visualisiert werden kann.

Zusätzlich oder alternativ illuminiert das erste Visualisierungsmittel in einer Ausführung den Bereich bzw. die Fläche, falls ein Erreichen der bevorstehenden Stellung bzw. Stoppstellung in einer ersten Auslage des Roboterarms prognostiziert wird, und hiervon unterschiedlich, falls ein Erreichen der bevorstehenden Stellung bzw. Stoppstellung in einer zweiten Auslage des Roboterarms prognostiziert wird. In einer Ausführung kann das Visualisierungsmittel den Bereich bzw. die Fläche in einer ersten Farbe, Helligkeit und/oder Größe, insbesondere einer ersten Anzahl von Elementen, illuminieren, falls ein Erreichen der bevorstehenden Stellung bzw. Stoppstellung in der ersten Auslage prognostiziert wird, und in einer hiervon verschiedenen Farbe, Helligkeit und/oder Größe, insbesondere Anzahl von Elementen, illuminieren, falls ein Erreichen der bevorstehenden Stellung bzw. Stoppstellung in der zweiten Auslage prognostiziert wird.

Hierdurch kann die bevorstehende Verstellung besonders vorteilhaft visualisiert werden, da dem Anwender zusätzlich zum Stellweg auch eine Auslage des Roboterarms, insbesondere also eine ausgestreckte(re) Pose bzw. eine weniger ausgestreckte Pose visualisiert werden kann.

Erfindungsgemäß illuminiert das erste Visualisierungsmittel:
- eine, insbesondere kreis-, kreissegment- oder ellipsenartige, Fläche unter einem Aufenthaltsraum des Roboterarms in einer in einer vorgegebenen ersten Zeit bevorstehenden ersten Stellung bzw. einer Stellung der wenigstens einen Achse, die diese in der vorgegebenen ersten Zeit voraussichtlich erreichen bzw. einnehmen wird, (einerseits); und
- eine, insbesondere gleichartige, insbesondere gleich große und/oder gleich konturierte, Fläche unter einem Aufenthaltsraums des Roboterarms in wenigstens einer in einer vorgegebenen weiteren Zeit bevorstehenden nächsten Stoppstellung der wenigstens einen Achse (andererseits)
gleichzeitig und in unterschiedlicher Farbe, Helligkeit und/oder Größe, insbesondere Anzahl von Elementen.

Hierdurch kann ein Verlauf der bevorstehenden Verstellung vorteilhaft visualisiert werden.

In einer Ausführung zeigt das erste Visualisierungsmittel in Abhängigkeit von der bevorstehenden Verstellung der wenigstens einen Achse des Roboterarms unterschiedliche Symbole aus einer vorgegebenen Gruppe von graphischen Symbolen an, die in einer Ausführung Richtungssymbole, insbesondere Pfeile oder dergleichen, Warnsymbole, insbesondere Verbotssymbole oder dergleichen, und/oder Zahlen und/oder Ziffern umfasst.

Hierdurch kann die bevorstehende Verstellung besonders vorteilhaft visualisiert werden, da dem Anwender durch ein entsprechendes Symbol beispielsweise ein Richtungssinn der Verstellung, ein Warnhinweis und/oder eine zusätzliche Information visualisiert werden kann.

In einer Ausführung vergrößert das erste Visualisierungsmittel eine Helligkeit und/oder Farbintensität des illuminierten Bereichs und/oder der illuminierten Fläche und/oder des anzeigten Symbols in einer vorgegebenen Einblendzeit, die in einer Ausführung wenigstens 0,1 s, insbesondere wenigstens 0,25 s, und/oder höchstens 1 s, insbesondere höchstens 0,5 s beträgt und/oder von einem Zustand, insbesondere Geschwindigkeit, des Roboterarms und/oder der bevorstehenden Verstellung abhängt. Zusätzlich oder alternativ reduziert das erste Visualisierungsmittel eine Helligkeit und/oder Farbintensität des illuminierten Bereichs und/oder der illuminierten Fläche und/oder des anzeigten Symbols in einer vorgegebenen Ausblendzeit, die in einer Ausführung wenigstens 0,1 s, insbesondere wenigstens 0,25 s, und/oder höchstens 1 s, insbesondere höchstens 0,5 s beträgt und/oder von einem Zustand, insbesondere Geschwindigkeit, des Roboterarms und/oder der bevorstehenden Verstellung abhängt.

Durch ein solches Ein- bzw. Ausfaden kann die bevorstehende Verstellung besonders vorteilhaft visualisiert werden, da Veränderungen regelmäßig besser wahrgenommen werden.

In einer Ausführung visualisiert das erste Visualisierungsmittel eine bevorstehende Verstellung der wenigstens einen Achse des Roboterarms unabhängig von einer bevorstehenden Verstellung wenigstens einer weiteren, insbesondere distale(re)n bzw. roboterarmbasisferne(re)n, Achse des Roboterarms, insbesondere unabhängig von einer bevorstehenden Verstellung einer distalen Roboterhand.

Hierdurch kann sich der Mensch in einer Ausführung vorteilhaft auf eine kritische(re) Schwenkbewegung einer roboterbasisnäheren bzw. -nächsten Achse konzentrieren und beispielsweise ein Ausschwenken des Roboterarms oder eine Bewegung einer distalen Roboterhand demgegenüber vernachlässigen.

In einer Ausführung visualisiert ein zweites Visualisierungsmittel eine bevorstehende Verstellung dieser weiteren Achse des Roboterarms, insbesondere in einer der für das erste Visualisierungsmittel hier beschriebenen Weisen, insbesondere also am Roboterarm und/oder in dessen Arbeitsraum und/oder auf der Arbeitsfläche unter dem Roboterarm.

Hierdurch kann in einer Ausführung zusätzlich zu einer kritische(re)n Schwenkbewegung einer roboterbasisnächsten Achse auch beispielsweise ein Ausschwenken des Roboterarms visualisiert werden.

In einer Ausführung weist das erste Visualisierungsmittel ein oder mehrere, insbesondere selektiv ansteuer- und/oder abdunkel-, insbesondere abschattbare, Leuchtmittel, insbesondere LEDs auf, die in einer Ausführung in einer oder mehreren Reihen und/oder ringförmig angeordnet sein können. Zusätzlich oder alternativ weist in einer Ausführung das zweite Visualisierungsmittel ein oder mehrere, insbesondere selektiv ansteuer- und/oder abdunkel-, insbesondere abschattbare, Leuchtmittel, insbesondere LEDs auf, die in einer Ausführung in einer oder mehreren Reihen und/oder ringförmig angeordnet sein können. In einer Ausführung werden die ringförmig angeordneten Leuchtmittel (ring)segmentweise angesteuert, insbesondere er- bzw. beleuchtet bzw. abgedunkelt.

Hierdurch kann in einer Ausführung ein bzw. der Bereich am Roboterarm bzw. eine bzw. die Fläche unter einem Aufenthaltsraums des Roboterarms vorteilhaft selektiv illuminiert werden.

Nach einer Ausführung der vorliegenden Erfindung weist ein System zum Betreiben eines bzw. des Roboterarms, das erste Visualisierungsmittel auf, wobei das System, insbesondere sein erstes Visualisierungs- und/oder ein Steuermittel des Systems, insbesondere zum Steuern des erste Visualisierungsmittels und/oder Roboterarms, zur Durchführung eines hier beschriebenen Verfahrens eingerichtet ist, insbesondere hard- und/oder software-, insbesondere programmtechnisch.

In einer Ausführung wird bzw. ist das erste Visualisierungsmittel, insbesondere lösbar und/oder in einer formschlüssig vorgegebenen Pose, an einer Roboterarmbasis oder einem Roboterarmglied, insbesondere einem mit der Roboterarmbasis in einem Gelenk verbundenen roboterarmbasisnächsten Roboterarmglied, angeordnet.

In einer Ausführung weist das System, insbesondere sein erstes Visualisierungs- und/oder sein Steuermittel, auf:
Mittel zum Visualisieren wenigstens einer in einer vorgegebenen Zeit bevorstehenden Stellung und/oder einer bevorstehende Stoppstellung der wenigstens einen Achse durch das erste Visualisierungsmittel, insbesondere zum Illuminieren eines der bevorstehenden Stellung bzw. Stoppstellung der wenigstens einen Achse zugeordneten Bereichs am Roboterarm und/oder einer, insbesondere kreis-, kreissegment- oder ellipsenartigen, Fläche unter einem Aufenthaltsraum des Roboterarms in der bevorstehende Stellung bzw. Stoppstellung der wenigstens einen Achse, insbesondere zum Illuminieren des Bereichs bzw. der Fläche, falls ein Erreichen der Stoppstellung in einem ersten Zeitraum prognostiziert wird, und zum hiervon unterschiedlichen Illuminieren, falls ein Erreichen der Stoppstellung in einem zweiten Zeitraum prognostiziert wird; und/oder zum Illuminieren des Bereichs bzw. der Fläche, falls ein Erreichen der bevorstehenden Stellung bzw. Stoppstellung in einer ersten Auslage des Roboterarms prognostiziert wird, und zum hiervon unterschiedlichen Illuminieren, falls ein Erreichen der bevorstehenden Stellung bzw. Stoppstellung in einer zweiten Auslage des Roboterarms prognostiziert wird; und/oder
Mittel zum Illuminieren eines Bereichs am Roboterarm, der einer in einer vorgegebenen ersten Zeit bevorstehenden ersten Stellung der wenigstens einen Achse zugeordnet ist, und/oder einer, insbesondere kreis-, kreissegment- oder ellipsenartigen, Fläche unter einem Aufenthaltsraum des Roboterarms in einer in einer vorgegebenen ersten Zeit bevorstehenden ersten Stellung der wenigstens einen Achse (einerseits) und wenigstens eines Bereichs am Roboterarm, der einer in einer vorgegebenen weiteren Zeit bevorstehenden weiteren Stellung oder einer bevorstehenden Stoppstellung der wenigstens einen Achse zugeordnet ist, und/oder
einer, insbesondere gleichartigen, Fläche unter einem Aufenthaltsraums des Roboterarms in wenigstens einer in einer vorgegebenen weiteren Zeit bevorstehenden weiteren Stellung oder einer bevorstehenden Stoppstellung der wenigstens einen Achse (andererseits) wenigstens teilweise gleichzeitig und/oder nacheinander und/oder in unterschiedlicher Farbe, Helligkeit und/oder Größe; und/oder
Mittel zum Anzeigen unterschiedlicher Symbole aus einer vorgegebenen Gruppe von graphischen Symbolen durch das erste Visualisierungsmittel in Abhängigkeit von der bevorstehenden Verstellung der wenigstens einen Achse des Roboterarms; und/oder Mittel zum Vergrößern einer Helligkeit und/oder Farbintensität der illuminierten Fläche und/oder des anzeigten Symbols in einer vorgegebenen Einblendzeit und/oder zum Reduzieren in einer vorgegebenen Ausblendzeit; und/oder
Mittel zum Visualisieren einer bevorstehende Verstellung der wenigstens einen Achse des Roboterarms durch das erste Visualisierungsmittel unabhängig von einer bevorstehenden Verstellung wenigstens einer weiteren Achse des Roboterarms, insbesondere ein zweites Visualisierungsmittel zum Visualisieren einer bevorstehenden Verstellung dieser weiteren Achse(n) des Roboterarms, insbesondere am Roboterarm und/oder in dessen Arbeitsraum und/oder auf der Arbeitsfläche unter dem Roboterarm.

Nach einer Ausführung der vorliegenden Erfindung weist ein Roboter einen bzw. den Roboterarm und ein bzw. das System zum Betreiben des Roboterarms nach einem hier beschriebenen Verfahren auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter(arm) betreiben kann. Ein Computerprogrammprodukt kann in einer Ausführung ein, insbesondere nichtflüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

Weitere Vorteile und Merkmale ergeben sich aus den Unteransprüchen und den Ausführungsbeispielen. Hierzu zeigt, teilweise schematisiert:
- Fig. 1: einen Roboter mit einem Roboterarm und einem System zum Betreiben des Roboterarms nach einer Ausführung der vorliegenden Erfindung;
- Fig. 2: ein Verfahren zum Betreiben des Roboterarms nach einer Ausführung der vorliegenden Erfindung;
- Fig. 3: einen Roboter mit einem Roboterarm und einem System zum Betreiben des Roboterarms nach einer weiteren Ausführung der vorliegenden Erfindung;
- Fig. 4: einen Roboter mit einem Roboterarm und einem System zum Betreiben des Roboterarms nach einer weiteren Ausführung der vorliegenden Erfindung;
- Fig. 5: einen Roboter mit einem Roboterarm und einem System zum Betreiben des Roboterarms nach einer weiteren Ausführung der vorliegenden Erfindung; und
- Fig. 6: einen Roboter mit einem Roboterarm und einem System zum Betreiben des Roboterarms nach einer weiteren Ausführung der vorliegenden Erfindung.

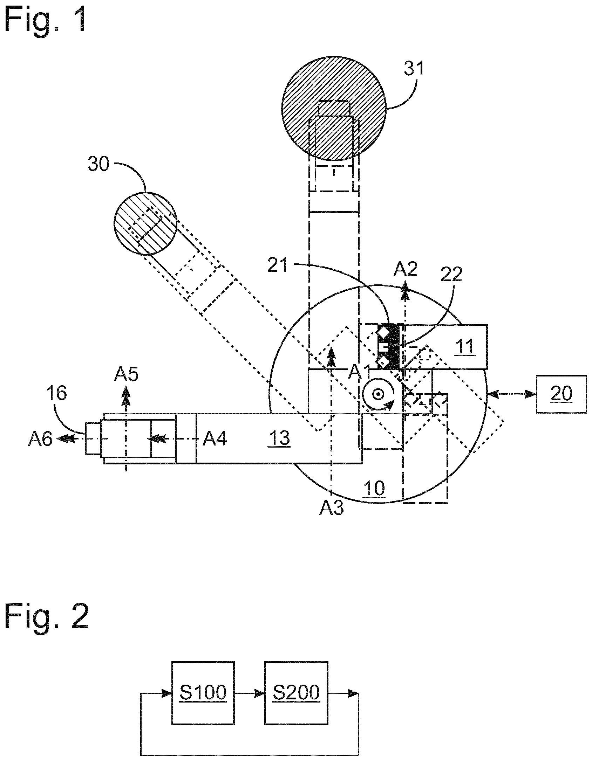

Fig. 1 zeigt einen Roboter mit einem Roboterarm und einem System zum Betreiben des Roboterarms nach einer Ausführung der vorliegenden Erfindung in einer Draufsicht von (vertikal) oben.

Der Roboterarm weist eine Roboterarmbasis 10 auf, die in einem Drehgelenk mit einem roboterarmbasisnächsten Roboterarmglied in Form eines Karussells 11 verbunden ist, das somit um eine roboterarmbasisnächste vertikale Drehachse A1 relativ zur Roboterarmbasis 10 verstellbar ist.

An dem Karussell 11 ist eine Schwinge um eine horizontale Drehachse A2 angelenkt, an der eine Roboterhand 13 um eine horizontale Drehachse A3 angelenkt ist, die drei paarweise aufeinander bzw. der Drehachse A3 senkrechte distale Drehachsen A4 - A6 aufweist.

Das System weist eine Robotersteuerung 20 zum Verstellen der Drehachsen A1 - A6 und ein erstes Visualisierungsmittel 21 mit LEDs 22 auf, das an dem Karussell 11 angeordnet ist.

Das System führt ein Verfahren zum Betreiben des Roboterarms nach einer Ausführung der vorliegenden Erfindung durch.

In einem Schritt S100 (vgl. Fig. 2) prognostiziert die Robotersteuerung 20, beispielsweise auf Basis eines abzuarbeitenden Arbeitsprogramms bzw. eines in diesem Arbeitsprogramm nächsten Programmbefehls, eine bevorstehende Verstellung der roboterarmbasisnächsten Drehachse A1.

Dabei prognostiziert die Robotersteuerung 20 zum Einen eine in einer vorgegebenen Zeit bevorstehende Stellung, beispielsweise eine Stellung, die der Roboterarm bzw. seine Drehachse A1 voraussichtlich in einer Sekunde aufweisen bzw. erreichen wird (gepunktet in Fig. 1), und zum Anderen eine bevorstehende Stoppstellung, in der der Roboterarm bzw. seine Drehachse A1 voraussichtlich anhalten wird (gestrichelt in Fig. 1).

Dann visualisiert das System in einem Schritt S200 diese bevorstehende Stellung, indem sie eine kreisartige Fläche 30 unter einem Aufenthaltsraum des Roboterarms in der bevorstehenden Stellung der Achse A1 auf bzw. in einer Arbeitsfläche des Roboterarms illuminiert.

Zusätzlich visualisiert das System in Schritt S200 diese bevorstehende Stoppstellung, indem sie eine größere kreisartige Fläche 31 unter einem Aufenthaltsraum des Roboterarms in der bevorstehenden Stoppstellung der Achse A1 dunkler oder heller und/oder in einer anderen Farbe illuminiert.

Hierzu projizieren eine oder mehrere der LEDs 22 des ersten Visualisierungsmittels 21 entsprechend Licht auf die Flächen 30, 31 und werden hierzu von der Steuerung 20 entsprechend selektiv angesteuert und/oder abgedunkelt.

In Abwandlungen können analog weitere Flächen unter dem Aufenthaltsraum des Roboterarms in anderen vorgegebenen Zeiten bevorstehenden Stellungen angezeigt und/oder die Anzeige der in der vorgegebenen Zeit bevorstehenden Stellung oder der Stoppstellung entfallen.

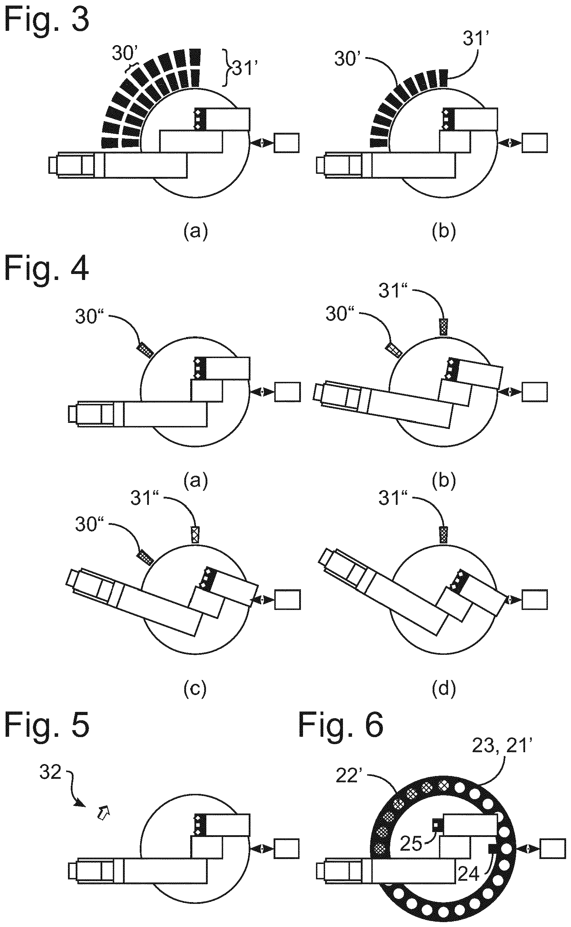

Fig. 3 zeigt einen Roboter mit einem Roboterarm und einem System zum Betreiben des Roboterarms nach einer weiteren Ausführung der vorliegenden Erfindung, die bis auf die nachfolgend erläuterten Unterschiede der vorstehend mit Bezug auf Fig. 1, 2 erläuterten Ausführung entspricht.

Im Ausführungsbeispiel der Fig. 3 visualisiert das System die Stoppstellung, indem sie eine kreissegmentartige Fläche 31' unter dem Aufenthaltsraum des Roboterarms in der bevorstehenden Stoppstellung der Achse A1 illuminiert. Zusätzlich visualisiert das System im Ausführungsbeispiel der Fig. 3 mehrere Stellungen, die der Roboterarm bzw. seine Drehachse A1 voraussichtlich zu verschiedenen Zeiten bis zum Erreichen der Stoppstellung aufweisen bzw. erreichen wird, indem sie entsprechende kreissegmentartige Flächen 30' unter dem jeweiligen Aufenthaltsraum des Roboterarms in diesen Stellungen der Achse A1 illuminiert.

Dabei illuminiert das System jeweils zwei Reihen des bzw. der jeweiligen Kreissegmente 30', 31', falls ein Erreichen der bevorstehenden Stellung bzw. Stoppstellung in einer ersten, ausgestreckte(re)n bzw. größeren Auslage des Roboterarms prognostiziert wird (vgl. Fig. 3 (a)), und jeweils nur eine Reihe des bzw. der jeweiligen Kreissegmente 30', 31', falls ein Erreichen der bevorstehenden Stellung bzw. Stoppstellung in einer zweiten, weniger ausgestreckten bzw. geringe(re)n Auslage des Roboterarms prognostiziert wird (vgl. Fig. 3 (b)).

Fig. 4 zeigt einen Roboter mit einem Roboterarm und einem System zum Betreiben des Roboterarms nach einer weiteren Ausführung der vorliegenden Erfindung, die bis auf die nachfolgend erläuterten Unterschiede den vorstehend mit Bezug auf Fig. 1 - 3 erläuterten Ausführungen entspricht.

Im Ausführungsbeispiel der Fig. 4 illuminiert das erste Visualisierungsmittel 21 eine kreissegmentartige Fläche 30" unter dem Aufenthaltsraum des Roboterarms in der in der vorgegebenen ersten Zeit von 1 Sekunde bevorstehenden ersten Stellung der Achse A1 und eine gleichartige Fläche 31" unter einem Aufenthaltsraum des Roboterarms in der bevorstehenden Stoppstellung der Achse A1. Dabei vergrößert das erste Visualisierungsmittel zunehmend eine Helligkeit und/oder Farbintensität der illuminierten Fläche 31" und reduziert simultan eine Helligkeit und/oder Farbintensität der illuminierten Fläche 30", wie durch die Zeit- bzw. Figurenfolge Fig. 4(a) -> 4(d) angedeutet so dass beide Flächen 30", 31" teilweise gleichzeitig und (durch Einblenden der Fläche 31" (vgl. Fig. 4(a) -> 4(b)) und Ausblenden der Fläche 30" (vgl. Fig. 4(c) -> 4(d)) teilweise nacheinander illuminiert werden.

Fig. 5 zeigt einen Roboter mit einem Roboterarm und einem System zum Betreiben des Roboterarms nach einer weiteren Ausführung der vorliegenden Erfindung, die bis auf die nachfolgend erläuterten Unterschiede den vorstehend mit Bezug auf Fig. 1 - 4 erläuterten Ausführungen entspricht.

Im Ausführungsbeispiel der Fig. 5 visualisiert das System die bevorstehende Verstellung der Achse A1, indem sie ein Pfeilsymbol 32 auf der Arbeitsfläche unter dem Roboterarm anzeigt.

Fig. 6 zeigt einen Roboter mit einem Roboterarm und einem System zum Betreiben des Roboterarms nach einer weiteren Ausführung der vorliegenden Erfindung, die bis auf die nachfolgend erläuterten Unterschiede den vorstehend mit Bezug auf Fig. 1 - 5 erläuterten Ausführungen entspricht.

Im Ausführungsbeispiel der Fig. 6 weist das erste Visualisierungsmittel 21' einen oder mehrere Reihen von ringförmig angeordneten LEDs 22' auf, die an einem ringartigen Träger 23 angeordnet sind, der lösbar an der Roboterbasis 10 befestigt ist, wobei die Pose des Trägers 23 relativ zur Roboterbasis 10 durch eine entsprechende Anschlussgeometrie 24 formschlüssig vorgegeben ist.

Zusätzlich ist am Karussell 11 ein zweites Visualisierungsmittel 25 mit LEDs angeordnet.

Das System visualisiert die bevorstehende Stoppstellung sowie die verschiedenen Stellungen, die der Roboterarm bzw. seine Drehachse A1 voraussichtlich zu verschiedenen Zeiten bis zum Erreichen der Stoppstellung aufweisen bzw. erreichen wird, indem sie entsprechende LEDs 22' illuminiert.

Zudem visualisiert das System die bevorstehende Verstellung der Achsen A2, A3 des Roboterarms, indem sie entsprechende LEDs des zweiten Visualisierungsmittels 25 illuminiert.

Obwohl in der vorhergehenden Beschreibung exemplarische Ausführungen erläutert wurden, sei darauf hingewiesen, dass eine Vielzahl von Abwandlungen möglich ist.

So kann insbesondere im Ausführungsbeispiel der Fig. 6 das erste Visualisierungsmittel bzw. die Reihe(n) von ringförmig angeordneten LEDs 22' stationär bzw. dauerhaft an der Roboterbasis 10 befestigt sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Verfahren zum Betreiben eines Roboterarms (10-16), wobei ein erstes Visualisierungsmittel (21; 21') eine bevorstehende Verstellung wenigstens einer Achse (A1-A6), insbesondere wenigstens einer roboterarmbasisnächsten Achse (A1), des Roboterarms (10-16) auf einer Arbeitsfläche unter dem Roboterarm (10-16), visualisiert, wobei das erste Visualisierungsmittel (21; 21'), an einer Roboterarmbasis (10) oder einem Roboterarmglied (11, 13, 16) insbesondere einem mit der Roboterarmbasis (10) in einem Gelenk verbundenen roboterarmbasisnächsten Roboterarmglied (11), angeordnet ist, **dadurch gekennzeichnet, dass** das erste Visualisierungsmittel (21; 21') eine, insbesondere kreis-, kreissegment- oder ellipsenartige, Fläche (30; 30'; 30") unter einem Aufenthaltsraum des Roboterarms (10-16) in einer in einer vorgegebenen ersten Zeit bevorstehenden ersten Stellung der wenigstens einen Achse (A1 - A6), und eine, insbesondere gleichartige, Fläche (31; 31'; 31") unter einem Aufenthaltsraums des Roboterarms (10-16) in wenigstens einer in einer vorgegebenen weiteren Zeit bevorstehenden nächsten Stoppstellung der wenigstens einen Achse (A1 - A6) in unterschiedlicher Farbe, Helligkeit und/oder Größe gleichzeitig illuminiert.

2. Verfahren nach Anspruch 1, **dadurch gekennzeichnet, dass** das erste Visualisierungsmittel (21; 21') dauerhaft oder lösbar und/oder in einer formschlüssig vorgegebenen Pose angeordnet ist.

3. Verfahren nach einem der vorhergehenden Ansprüche, **dadurch gekennzeichnet, dass** das erste Visualisierungsmittel (21; 21') in Abhängigkeit von der bevorstehenden Verstellung der wenigstens einen Achse (A1 - A6) des Roboterarms (10-16) unterschiedliche Symbole (32) aus einer vorgegebenen Gruppe von graphischen Symbolen (32) anzeigt.

4. Verfahren nach einem der vorhergehenden Ansprüche, **dadurch gekennzeichnet, dass** das erste Visualisierungsmittel (21; 21`) eine Helligkeit und/oder Farbintensität des illuminierten Bereichs und/oder der illuminierten Fläche (30; 30', 31; 31') und/oder des anzeigten Symbols (32) in einer vorgegebenen Einblendzeit vergrößert und/oder in einer vorgegebenen Ausblendzeit reduziert.

5. Verfahren nach einem der vorhergehenden Ansprüche, **dadurch gekennzeichnet, dass** das erste Visualisierungsmittel (21; 21`) eine bevorstehende Verstellung der wenigstens einen Achse (A1 - A6) des Roboterarms (10-16) unabhängig von einer bevorstehenden Verstellung wenigstens einer weiteren Achse (A1 - A6) des Roboterarms (10-16) visualisiert.

6. Verfahren nach dem vorhergehenden Anspruch, **dadurch gekennzeichnet, dass** ein zweites Visualisierungsmittel (21') eine bevorstehende Verstellung der weiteren Achse (A1 - A6) des Roboterarms (10-16), insbesondere am Roboterarm (10-16) und/oder in dessen Arbeitsraum und/oder auf der Arbeitsfläche unter dem Roboterarm (10-16), visualisiert.

7. Verfahren nach einem der vorhergehenden Ansprüche, **dadurch gekennzeichnet, dass** das erste und/oder zweite Visualisierungsmittel (21; 21') ein oder mehrere, insbesondere selektiv ansteuer- und/oder abdunkelbare, Leuchtmittel, insbesondere LEDs (22; 22'), aufweist.

8. System zum Betreiben eines Roboterarms (10-16), das ein erstes Visualisierungsmittel (21; 21') eingerichtet zum Visualisieren einer bevorstehende Verstellung wenigstens einer, insbesondere roboterarmbasisnächsten, Achse (A1 - A6) des Roboterarms (10-16) auf einer Arbeitsfläche unter dem Roboterarm (10-16) aufweist, **dadurch gekennzeichnet, dass** das System zur Durchführung eines Verfahrens nach einem der vorhergehenden Ansprüche eingerichtet ist, wenn das erste Visualisierungsmittel (21; 21'), an einer Roboterarmbasis (10) oder einem Roboterarmglied (11, 13, 16) insbesondere einem mit der Roboterarmbasis (10) in einem Gelenk verbundenen roboterarmbasisnächsten Roboterarmglied (11), des Roboterarms angeordnet ist.

9. Roboter mit einem Roboterarm (10-16) und einem System nach Anspruch 8 zum Betreiben des Roboterarms (10-16) nach einem Verfahren gemäß einem der Ansprüche 1 bis 7.

10. Computerprogrammprodukt mit einem Programmcode, der auf einem von einem Computer lesbaren Medium gespeichert ist, zur Durchführung eines Verfahrens nach einem der Ansprüche 1 bis 7.

## Claims

1. Method for operating a robot arm (10-16), wherein a first visualization means (21; 21') indicates an impending adjustment of at least one axis (A1-A6), in particular at least one axis (A1) closest to the robot arm base, of the robot arm (10-16). a work surface under the robotic arm (10- 16), wherein the first visualization means (21; 21'), on a robotic arm base (10) or a robotic arm limb (11, 13, 16), in particular one with the robotic arm base (10) in one jointly connected to the robot arm base next robot arm element (11), **characterized in that** the first visualization means (21; 21') has a surface (30; 30'; 30"), in particular in the shape of a circle, a circle segment or an ellipse, under a habitable space of the robot arm (10-16) in a first position of the at least one axis (A1 - A6) that is imminent in a predetermined first time, and a surface (31; 31'; 31"), in particular of the same type, under a dwelling space of the robot arm (10-16) simultaneously illuminated in at least one next stop position of the at least one axis (A1 - A6) in a different color, brightness and/or size, which is forthcoming in a predetermined further time.

2. Method according to Claim 1, **characterized in that** the first visualization means (21; 21') is arranged permanently or detachably and/or in a form-fitting predetermined pose.

3. Method according to one of the preceding claims, **characterized in that** the first visualization means (21; 21 ') depending on the upcoming adjustment of the at least one axis (A1 - A6) of the robot arm (10-16) different symbols (32) from a predetermined group of graphic symbols (32).

4. Method according to one of the preceding claims, **characterized in that** the first visualization means (21; 21 ') a brightness and / or color intensity of the illuminated area and / or the illuminated area (30; 30', 31; 31 ') and / or the displayed symbol (32) increased in a predetermined fade-in time and / or reduced in a predetermined fade-out time.

5. Method according to one of the preceding claims, **characterized in that** the first visualization means (21; 21') indicate an impending adjustment of the at least one axis (A1 - A6) of the robot arm (10-16) independently of an impending adjustment of at least one further axis (A1 - A6) of the robot arm (10-16) is visualized.

6. Method according to the preceding claim, **characterized in that** a second visualization means (21 ') an impending adjustment of the other axis (A1 - A6) of the robot arm (10-16), in particular on the robot arm (10-16) and / or in its workspace and/or visualized on the work surface under the robot arm (10-16).

7. Method according to one of the preceding claims, **characterized in that** the first and/or second visualization means (21; 21') has one or more light sources, in particular LEDs (22; 22'), which can in particular be selectively controlled and/or dimmed.

8. System for operating a robot arm (10-16), which has a first visualization means (21; 21') set up for visualizing an impending adjustment of at least one axis (A1 - A6) of the robot arm (10-16) on a work surface, in particular one closest to the base of the robot arm the robot arm (10-16), **characterized in that** the system is set up for carrying out a method according to one of the preceding claims if the first visualization means (21; 21'), on a robot arm base (10) or a robot arm member (11, 13, 16) in particular a robot arm link (11) of the robot arm which is connected to the robot arm base (10) in a joint and is closest to the robot arm base.

9. A robot having a robotic arm (10-16) and a system according to claim 8 for operating the robotic arm (10-16) according to a method according to any one of claims 1 to 7.

10. Computer program product with a program code, which is stored on a computer-readable medium, for carrying out a method according to one of Claims 1 to 7.

## Revendications

1. Procédé de fonctionnement d'un bras de robot (10-16), dans lequel un premier moyen de visualisation (21 ; 21') indique un réglage imminent d'au moins un axe (A1-A6), notamment d'au moins un axe (A1) le plus proche à la base du bras du robot, du bras du robot (10-16). une surface de travail sous le bras robotique (10-16), dans laquelle les premiers moyens de visualisation (21 ; 21'), sur une base de bras robotique (10) ou un membre de bras robotique (11, 13, 16), en particulier avec la base de bras robotique (10) étant reliée conjointement à la base de bras robotique suivant l'élément de bras robotique (11), **caractérisé en ce que** le premier moyen de visualisation (21 ; 21') a une surface (30 ; 30' ; 30"), en particulier sous la forme d'un cercle, d'un segment de cercle ou d'une ellipse, sous un espace habitable du bras de robot (10-16) dans une première position dudit au moins un axe (A1 - A6) qui est imminente dans une position prédéterminée première fois, et une surface (31 ; 31' ; 31"), notamment du même type, sous un espace d'habitation du bras robot (10-16) éclairé simultanément dans au moins une position d'arrêt suivante de la au moins une l'axe (A1 - A6) dans une couleur, une luminosité et/ou une taille différente, qui est disponible dans un temps supplémentaire prédéterminé.

2. Procédé selon la revendication 1, **caractérisé en ce que** le premier moyen de visualisation (21; 21') est agencé de façon permanente ou amovible et/ou dans une pose prédéterminée épousant la forme.

3. Procédé selon l'une des revendications précédentes, **caractérisé en ce que** les premiers moyens de visualisation (21 ; 21') en fonction du réglage à venir de l'au moins un axe (A1 - A6) du bras robot (10-16) différent symboles (32) parmi un groupe prédéterminé de symboles graphiques (32).

4. Procédé selon l'une des revendications précédentes, **caractérisé en ce que** les premiers moyens de visualisation (21 ; 21') une luminosité et/ou une intensité de couleur de la zone éclairée et/ou de la zone éclairée (30 ; 30', 31 ; 31 ') et/ou le symbole affiché (32) augmenté dans un temps de fondu d'entrée prédéterminé et/ou réduit dans un temps de fondu de sortie prédéterminé.

5. Procédé selon l'une des revendications précédentes, **caractérisé en ce que** les premiers moyens de visualisation (21 ; 21') indiquent un réglage imminent de l'au moins un axe (A1 - A6) du bras robot (10-16) indépendamment de un réglage imminent d'au moins un autre axe (A1 - A6) du bras de robot (10-16) est visualisé.

6. Procédé selon la revendication précédente, **caractérisé en ce qu'**un second moyen de visualisation (21') d'un réglage imminent de l'autre axe (A1 - A6) du bras robot (10-16), notamment sur le bras robot (10 -16) et/ou dans son espace de travail et/ou visualisé sur le plan de travail sous le bras du robot (10-16).

7. Procédé selon l'une des revendications précédentes, **caractérisé en ce que** les premiers et/ou deuxièmes moyens de visualisation (21 ; 21') comportent une ou plusieurs sources lumineuses, notamment des LED (22 ; 22'), qui peuvent notamment être sélectivement contrôlé et/ou atténué.

8. Système pour faire fonctionner un bras de robot (10-16), qui a un premier moyen de visualisation (21 ; 21') configuré pour visualiser un réglage imminent d'au moins un axe (A1 - A6) du bras de robot (10-16) sur une surface de travail, notamment la plus proche de la base du bras robotique du bras robotisé (10-16), **caractérisé en ce que** le système est agencé pour mettre en oeuvre un procédé selon l'une des revendications précédentes si les premiers moyens de visualisation (21 ; 21'), sur une base de bras de robot (10) ou un élément de bras de robot (11, 13, 16), en particulier une liaison de bras de robot (11) du bras de robot qui est reliée à la base de bras de robot (10 ) dans une articulation et est le plus proche de la base du bras du robot.

9. Robot ayant un bras robotique (10-16) et un système selon la revendication 8 pour actionner le bras robotique (10-16) selon un procédé selon l'une quelconque des revendications 1 à 7.

10. Produit programme d'ordinateur avec un code de programme, qui est stocké sur un support lisible par ordinateur, pour la mise en oeuvre d'un procédé selon l'une des revendications 1 à 7.
